# EUROPEAN PATENT SPECIFICATION

(11) **EP 0 482 905 B1**
(45) Date of publication and mention of the grant of the patent: **07.05.1997**
(21) Application number: 91309786.1
(22) Date of filing: 23.10.1991
(51) Int. Cl.: H04N 9/80

(54) **Digital data recording and/or reproducing apparatus**
Aufzeichnungs- und/oder Wiedergabegerät für digitale Daten
Dispositif d'enregistrement et/ou de reproduction de données digitales

(30) Priority: 23.10.1990 JP 286258/90
(43) Date of publication of application: 29.04.1992
(73) Proprietor: SONY CORPORATION, Tokyo 141 (JP)
(72) Inventor: Yoshinaka, Tadaaki, Shinagawa-ku, Tokyo 141 (JP)
(74) Representative: Harris, Ian Richard

(56) References cited:
- US-A- 4 206 476
- SMPTE JOURNAL vol. 98, no. 10, October 1989, WHITE PLAINS, NY US pages 738 - 747 , XP65646 L. THORPE, ET AL.
- TELEVISION vol. 19, no. 5, September 1982, LONDON GB pages 27 - 31 J.L.E. BALDWIN
- SMPTE JOURNAL vol. 89, no. 3, March 1980, SCARSDALE, NY US pages 173 - 180 K. YOKOHAMA, ET AL.

## Description

This invention relates to digital data recording and/or reproducing apparatus and to digital data reproducing apparatus.

As a recording and/or reproducing apparatus for recording and/or reproducing a video signal of a high definity television (HDTV) system a digital video tape recorder (DVTR) in which an input video signal is converted into a digital video signal and recorded on or reproduced from a magnetic tape is known.

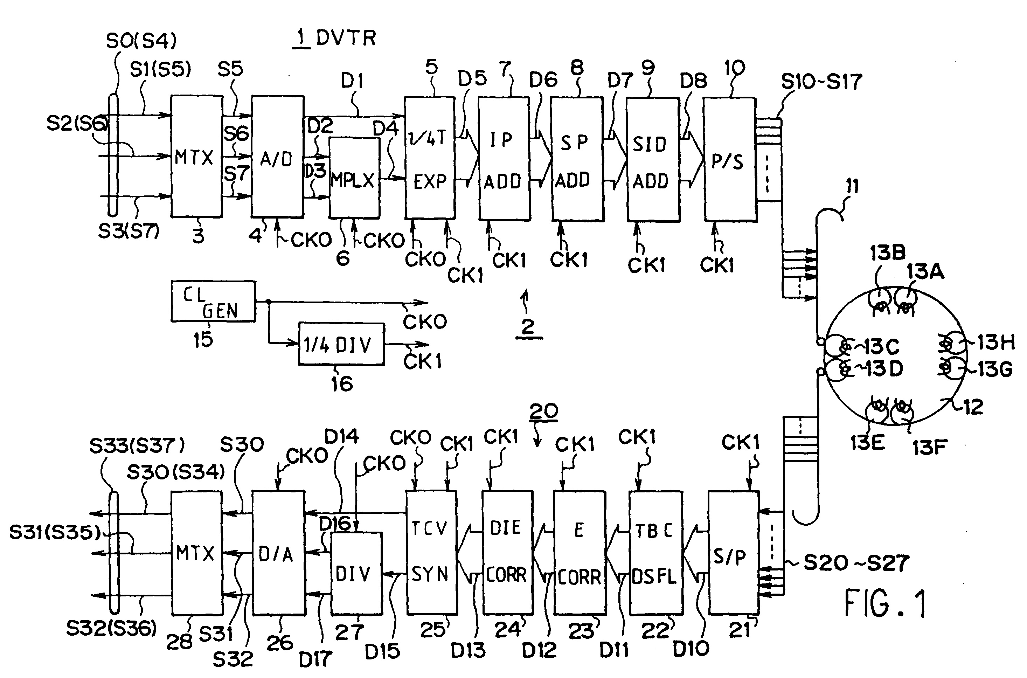

That is, as shown in Figure 1, in a recording system 2 of a DVTR 1, a component video signal S0 composed of red, green and blue signals S1, S2 and S3, or a component video signal S4 composed of a luminance signal S5 and R-Y and B-Y chrominance signals S6 and S7 having frequencies within a frequency band of, for example, 30 MHz is supplied to a matrix circuit 3.

In the matrix circuit 3, when the component video signal S4 is inputted, the luminance signal S5 and the R-Y and B-Y chrominance signal S6 and S7 included therein are supplied to an analogue to digital (A/D) converter circuit 4 as they are, and, when the component video signal S0 is inputted, it is converted into the component video signal S4 and then supplied to the A/D converter 4.

The A/D converter 4 samples the luminance signal S5 with a timing of a first clock CK0 supplied thereto, and a resultant digital luminance signal D1 having a frequency within a frequency band of 74.25 MHz is supplied to a one-fourth times expansion circuit 5.

The A/D converter 4 also samples the inputted R-Y and B-Y chrominance signals S6 and S7 with the timing of the first clock CK0, resultant R-Y and B-Y digital chrominance signals D2 and D3 having frequencies within a frequency band of 74.25/2 MHz are multiplexed in a multiplexer circuit 6, and the multiplexed signal is supplied to the one-fourth times expansion circuit 5 as a multiplexed digital signal D4.

The expansion circuit 5 converts the digital luminance signal D1 and the multiplexed digital chrominance signal D4 inputted with the timing of the first clock CK0 into digital video data D5 composed of a total of 8-channel parallel data, four channels for each, with a timing of a second clock CK1 whose frequency is one-fourth the first clock CK0, to reduce the processing rate to 18.5625 MHz, and the data D5 are supplied to an interleave/parity adding circuit 7.

The adding circuit 7 interleave-processes the digital video data D5 and adds an outer parity thereto, and a resultant signal is supplied to a subsequent shuffling/parity adding circuit 8 as digital video data D6.

The adding circuit 8 shuffles the inputted digital video data D6 and, after the latter has been arranged in blocks, adds an inner parity thereto, and supplies them to a subsequent SYNC-ID adding/coding circuit 9 as digital video data D7.

The adding/coding circuit 9 adds to each block of the digital video data D7 a synchronizing pattern and ID information including an identification code and an address and, after adding to a head and to an end of each set of a predetermined number of blocks a preamble and a postamble, respectively, codes it with a 8-8 modulation system to obtain recording digital video data D8 which are supplied to a parallel-serial converter 10.

The parallel-serial convertor 10 parallel-to-serial converts the recording digital video data D8 into recording signals S10 to S17 of eight channels, each with a data rate of 148.5 Mbps, and supplies them to heads 13A and 13H for eight channels which are mounted on a drum 12 on which a magnetic tape 11 is wound in an omega shape.

Apparatus as described above is disclosed in SMPTE Journal Volume 98, No 10, October 1989, White Plains, NYUS, pages 738-747, XP65646, L. Thorpe et al.

In the recording system 2 of the DVTR 1, the first clock CKO is generated by a clock generator circuit 15 and supplied to the A/D converter 4, the expansion circuit 5 and the multiplexer circuit 6.

The second clock CK1 is obtained by dividing the first clock CKO by four by means of a 1/4 frequency divider circuit 16 and is supplied to the expansion circuit 5, the interleave/parity adding circuit 8, the SYNC-ID adding/coding circuit 9 and the parallel-serial converter 10, so that a recording signal processing circuit of the latter stage from the expansion circuit 5 operates with a timing of the second clock CK1.

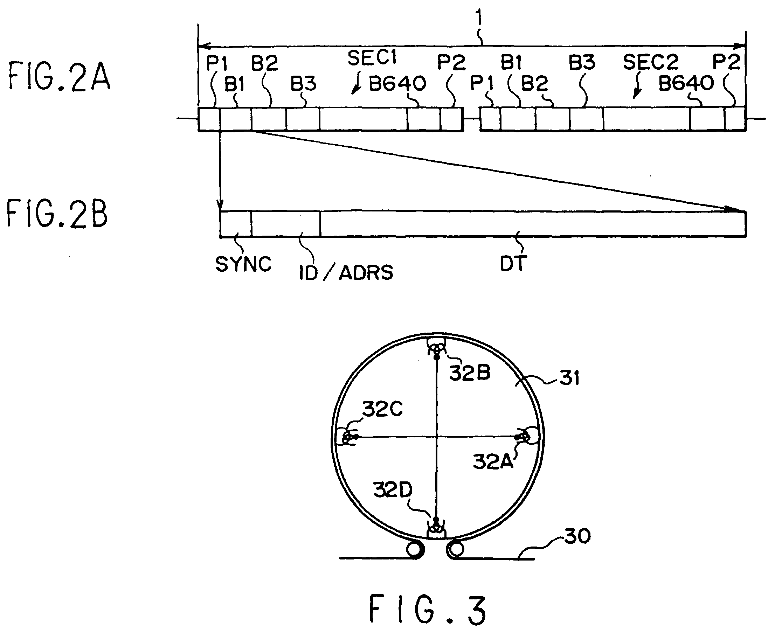

Therefore, as shown in Figure 2, two sectors SEC1 and SEC2 corresponding to sectors of recording tracks are recorded on the tape 11 by two revolutions of the heads 13A to 13H rotating at a rotation speed of 120 Hz, to correspond to one field of the inputted video signal SO (S4).

A preamble P1 and a postamble P2 are attached to each sector SEC to indicate a head and an end thereof, and a data recording area including 640 data blocks B1 to B640 is formed between the preamble P1 and the postamble P2.

Each block B corresponds to a data amount of 226 words as a whole as shown in Figure 2, including a synchronizing pattern SYNC of two words, the identification and ID/ADRS of four words and subsequently data DT of 220 words.

On the other hand, in a reproducing system 20 of the DVTR 1, reproduced signals S20 to S27 at a data rate of 148.5 Mbps for eight channels which are obtained from the heads 13A to 13H of the drum 12 are converted by a serial-parallel converter 21 into parallel signals which are sent to a TBC/deshuffling circuit 22 as reproduced digital video data D10 at a processing rate of frequency 18.5625 MHz with a timing of the second clock CK1.

TBC/deshuffling circuit 22 performs a time-axis correction for the reproduced digital video data D10 inputted thereto to match the block phase with the second clock CK1, and then an error correction according to the inner parity and a de-shuffling process, and supplies a resultant digital video data D11 to an error correction circuit 23.

The error correction circuit 23 performs an error correction for the inputted digital video data D11 according to the outer parity and supplies a resultant digital video data D12 to a de-interleave/error correction circuit 24.

The correction circuit 24 de-interleaves the inputted digital video data D12 and corrects errors which could not be corrected by the error corrections according to the inner and outer parities by means of interpolation, etc., and sends resultant digital video data D13 to a time compression video image synthesizer circuit 25.

The synthesizer circuit 25 time-compresses the digital video data D13 for the eight channels inputted as mentioned previously and synthesizes them to produce a digital luminance signal D!4 and a multiplexed digital chrominance signal D15 having frequencies in a frequency band of 74.25 MHz corresponding to the first clock CK0.

The digital luminance signal D14 is inputted directly to a digital to analogue (D/A) converter circuit 26. The multiplexed chrominance signal D15 is divided into R-Y and B-Y digital chrominance signals D16 and D17 having frequencies in a frequency band of 74.25/2 MHz by a division circuit 27, which are then supplied to the D/A converter 26.

The D/A converter 26 converts the digital luminance signal D14 and the R-Y and B-Y chrominance signals D16 and D17 into analogue signals, respectively, and supplies a luminance signal S30 having frequencies in a frequency band of 30 MHz to a matrix circuit 28.

In this reproduction system 20 of the DVTR 1, the second clock CK1 obtained through the 1/4 frequency divider circuit 16 is supplied to the serial-parallel converter 21, the TBC/de-shuffling circuit 22, the error correction circuit 23, the deinterleave/error correction circuit 24 and the time compression video image synthesizer circuit 25, and the operations are performed with a timing of the second clock CK1.

The first clock CK0 supplied the clock generator circuit 15 is supplied to the time compression video image synthesizer circuit 25, the D/A converter 26 and the divider circuit 27, to operate them with a timing of the first clock CK0.

The matrix circuit 27 outputs the inputted luminance signal S30 and the R-Y and B-Y chrominance signals S31 and S32 directly as a component signal S33, or produces red, green and blue signals S34, S35 and S36 from the inputted luminance signal S30 and the R-Y and B-Y chrominance signals S31 and S32 and outputs them as a component video signal S37, as required, thus reproducing the video signal recorded on the tape 11.

In this DVTR 1, the sampling frequency is selected as 4 fsc according to quantization rule, etc., and, when data to be recorded are determined thereby, the number of blocks within one field of video signal does not become an integer.

For this reason, in the recording pattern mentioned with respect to Figure 2, there is a problem that an interval between block pulses each forming a border between adjacent blocks B becomes discontinuous in each sector SEC, causing signal processing in the recording system 2 and the reproducing system 20 to be difficult.

This problem becomes more severe with increase in the number of channels, such as the above mentioned 8-channel recording and reproducing.

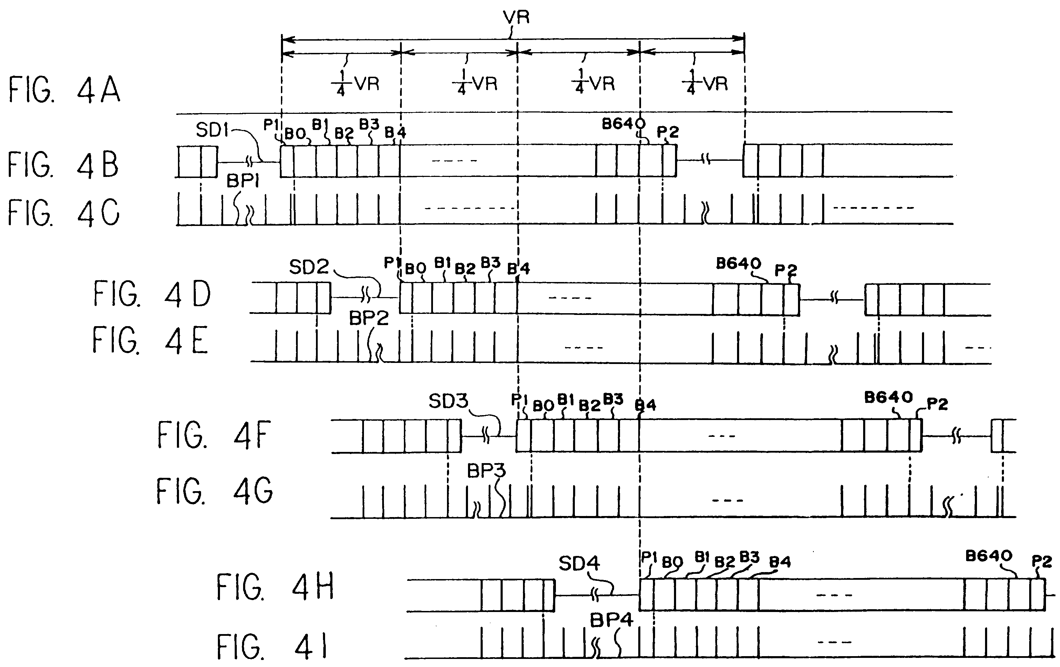

That is, as shown in Figure 3, for example, considering a DVTR in which four magnetic heads 32A to 32D are arranged on a drum on which a magnetic tape 30 is wound in omega shape with mutual spacings of 90°, and the heads 32A to 32D are rotated at a rotation speed of 60 Hz, the video data corresponding to one field are converted into four parallel data and recorded as sector data SD1, SD2, SD3 and SD4 (figures 4B, 4D, 4F and 4H) each composed of a collection of blocks, with respect to a vertical reference phase VR representing a border between adjacent fields as shown in Figure 4A.

Since the number of blocks in each sector data SD1, SD2, SD3 and SD4 in the respective channels within one field is not an integer, block pulses PB1, BP2, BP3 and BP4 for four channels have different phases as shown in Figure 4C, 4E, 4G and 41, and circuits such as address circuits of the signal processing system and memories which process data block by block require four respective circuit constructions, resulting in a large sized circuit as a whole.

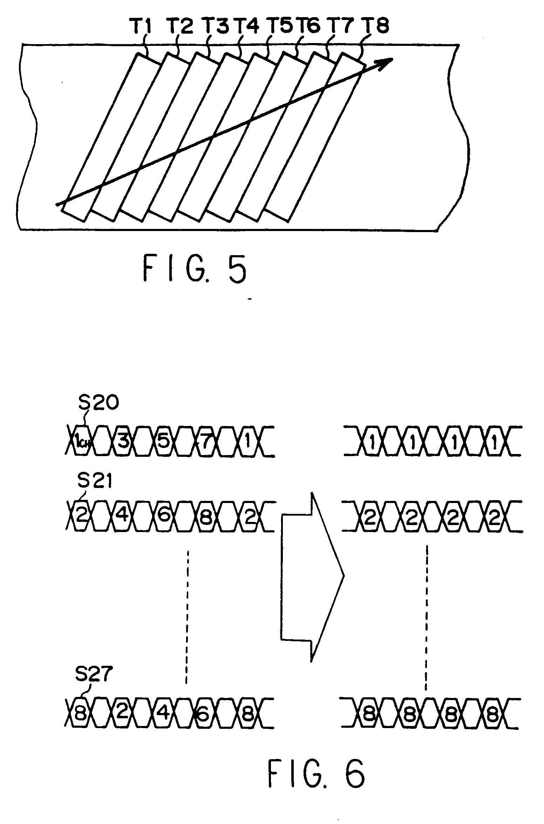

This problem also occurs in the reproduction system. For example, when variable speed reproduction is to be performed, each of the signals S20 to S27 reproduced from the heads 13A to 13H becomes that of another channel as shown in Figure 6, since the respective heads 13A to 13H for eight channels as mentioned previously with respect to Figure 1 scan recording tracks T1, T2, T3, ..., T8 on the tape 11 obliquely as shown in Figure 5.

Therefore, in such a case, it is necessary to exchange the reproduced signals S20 to S27 from the heads 13A to 13H with outputs of the heads 13A to 13H which are normal, for example, with a channel converter circuit. Since there are phase differences in block pulses between the respective channels even if the block phase of the respective channels are matched with the first clock CK1 by means of the previously mentioned TBC/de-shuffling circuit 22, a correction circuit therefor is necessary, causing the circuit construction to be complicated.

According to the present invention there is provided a digital data recording and/or reproducing apparatus comprising: sampling means for sampling digital data in each of a plurality of channels with the same sampling signal having a first frequency; shuffling means for shuffling said sampled digital data; data block forming means for forming data blocks, each of which has a predetermined number of digital data output from the shuffling means; adding means for adding additional data to each predetermined number of data blocks to form a recording data group; recording means for recording a plurality of said recording data groups with an interval therebetween on each recording track of a recording medium by means of heads corresponding to said plurality of channels; reproducing means for reproducing said recorded data from the recording medium; characterised by: clock signal generating means for generating said sampling signal and a clock signal having a second frequency different from said first frequency; frequency conversion memory means for memorizing data downstream from said sampling means in response to said sampling signal in each channel and for outputting the memorized data in response to said clock signal, said second frequency of said clock signal being selected so that the length of said interval is an integral multiple of that of a said data block and said clock signal being supplied to said shuffling means, data block forming means and/or adding means downstream from said first-in-first-out memory.

According to the present invention there is also provided a digital data reproducing apparatus for reproducing data recorded on a recording medium, said recorded data comprising a plurality of data groups recorded in respective recording tracks corresponding to a respective plurality of channels with a predetermined interval therebetween, each data group comprising a plurality of data blocks having a predetermined number of digital data each with additional data added thereto, said digital data reproducing apparatus comprising: reproducing means for reproducing said recorded data from said recording medium; clock signal generating means for generating first, second and third signals; frequency converting memory means for memorizing said reproduced data from said recording medium in response to said second signal in each channel and outputting the memorized data in response to said third signal having a frequency different from said second frequency and selected so that the length of said interval is an integral multiple of that of a said data block, said first clock having a frequency different from the frequency of said third signal; and time axis compression/expansion means responsive to said first and third signals for compressing or expanding the time axis of digital data output from said frequency converting memory means, so that said compressed or expanded digital data have a predetermined sampling frequency corresponding to the frequency of said first signal.

An embodiment of the invention may comprise a digital data recording and/or reproducing apparatus in which for blocking digital data in every recording unit, recording them on a predetermined recording medium and reproducing therefrom, first frequency converter means is provided in a recording signal processing means for converting the processing rate into a frequency at which a border between adjacent recording units becomes continuous, so that the digital data are recorded on the recording medium as a pattern having continuous borders between the recording units.

Another embodiment of the invention may comprise a recording and/or reproducing apparatus for blocking digital data every recording unit, recording them on a predetermined recording medium and reproducing therefrom, in which second frequency converter means is provided in reproducing signal processing means for converting the processing speed into a frequency at which a border between adjacent recording units becomes continuous, so that a recording medium on which has been recorded a pattern having a discontinuous border between recording units can be reproduced.

The invention will now be described by way of example with reference to the accompanying drawings, throughout which like parts are referred to by like references, and in which:
Figure 1 is a block diagram of a digital video tape recorder;
Figures 2A and 2B illustrate recording patterns of one field;
Figure 3 illustrates a construction of a 4-channel recording head;
Figures 4A to 4I are timing charts for explanation of 4-channel recording operation;
Figure 5 is an illustration explaining variable rate reproduction;
Figure 6 is an illustration for explaining channel data rearrangement thereof; and
Figure 7 is a block diagram showing an embodiment of digital video tape recorder according to the present invention.

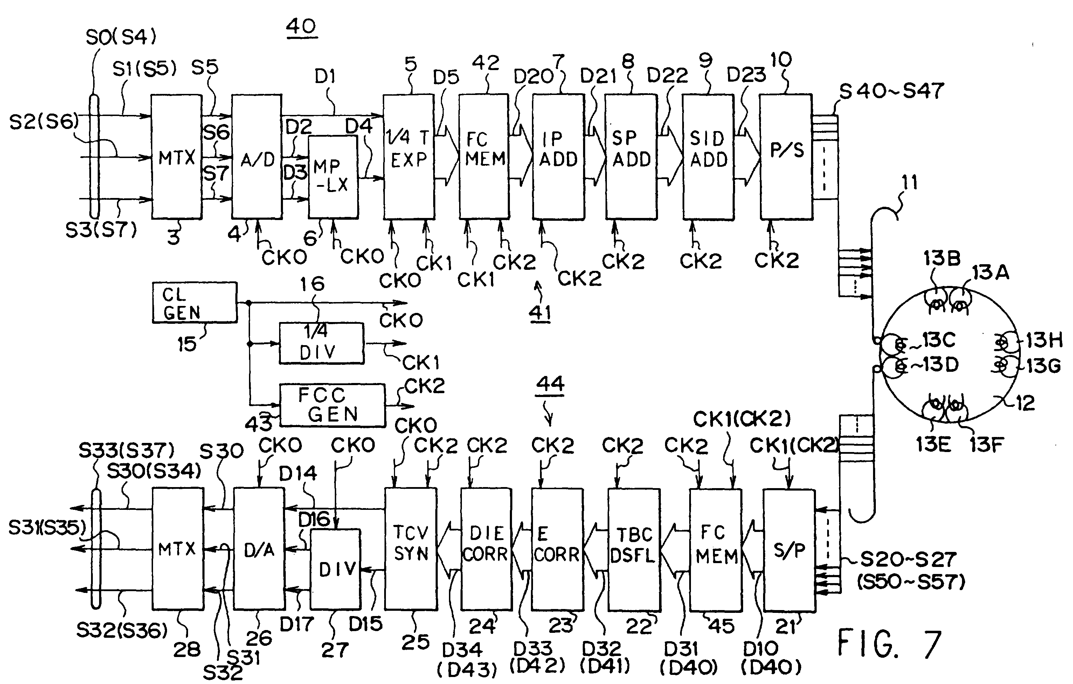

Referring to Figure 7, in the embodiment of DVTR 40, digital video data D5 supplied from a 1/4 division times expansion circuit 5 with a timing of a second clock CK1 in a recording system 41 is inputted to a frequency conversion memory 42.

The digital video data D5 are 8-channel parallel data and are supplied at a processing rate of 18.5625 MHz.

The frequency conversion memory 42 comprises a first-in-first-out (FIFO) memory and reads the digital video data D5, which are written with a timing of a second clock CK1, with a timing of a third clock CK2 to convert the frequency of the digital video data D5, thereby to produce a digital video data D20 at a processing rate corresponding to the third clock CK2, and supplies them to an interleave/parity adding circuit 7.

The third clock CK2 is produced by a frequency conversion clock generator circuit 43 on the basis of a first clock CK0 supplied from a clock generator circuit 15 and its frequency is selected such that in a recording pattern described with respect to Figure 2, the border between adjacent blocks B within each sector SEC including a head blanking period becomes continuous, whereby time intervals of block pulses are equal at the border.

The interleave/parity adding circuit 7, a shuffling/parity adding circuit 8, a SYNC-ID adding/coding circuit 9 and a parallel-serial converter 10 which form a recording signal processing circuit after the frequency conversion memory 42 are supplied with the third clock CK2, in lieu of the first clock CK0, so that they operate with a timing corresponding to the third clock CK2.

The interleave/parity adding circuit 7 interleaves the digital video data D20, adds an outer parity thereto, and supplies it to the shuffling/parity adding circuit 8 as digital video data D21.

The shuffling/parity adding circuit 8 shuffles the digital video data D21, forms it into blocks and adds an inner parity thereto, and supplies it to the subsequent SYNC-ID adding/coding circuit 9 as digital data D22.

The SYNC-ID adding/coding circuit 9 adds to every block of the digital video data D22 a synchronizing pattern and ID information including an identification and an address, etc., and, after adding a preamble and a postamble to a head and an end of each group of a predetermined number of blocks, respectively, the video data D22 are coded by an 8-8 modulation system and supplied to the parallel-serial converter 10 as recording digital video data D23.

The parallel-serial converter 10 converts the recorded digital video data D23 into 8-channel recording signals S40 to S47 and supplies them to heads 13A to 13H for the eight channels, and which are mounted on a drum 12 on which a magnetic tape 11 is wound in an omega shape.

Thus, in the DVTR 40, the input video signal S0 is recorded on the tape 11 with a recording pattern in which the border between adjacent blocks B within each sector SEC including the head blanking period and, therefore, the borders or boundaries between adjacent blocks B in a plurality of channels becomes common.

On the other hand, in a reproducing system 44 of the DVTR 40, when a tape 11 on which a recording pattern in which the borders or boundaries between adjacent blocks B in each sector SEC are discontinuous is to be reproduced, reproduction signals S20 to S27 for eight channels having a data rate of 148.5 Mbps obtained from the respective magnetic heads 13A to 13H are inputted to a serial-parallel converter 21.

In the serial-parallel converter 21, the inputted reproduced signals S20 to S27 for eight channels are converted into parallel signals which are inputted to a frequency conversion memory 45 as reproduced digital video data D10 of frequency 18.5625 MHz corresponding to the second clock CK1.

The frequency conversion memory 45 comprises an asynchronous FIFO memory similar to the above mentioned frequency conversion memory 42 and reads the reproduced digital video data D10, which are written therein with a timing of the second clock CK1, with a timing of the third clock CK2, to convert the frequency of the digital video data D10, produces digital video data D31 having a processing rate corresponding to the third clock CK2, and supplies them to a TBC/de-shuffling circuit 22.

The TBC/de-shuffling circuit 22, an error correction circuit 23, a de-interleave/error correction circuit 24 and a time compression video image synthesizing circuit 25, which form a reproduction signal processing circuit subsequent to the frequency conversion memory 45, are supplied with the third clock CK2, in lieu of the first clock CK1, so that they operate at a timing corresponding to the third clock CK2.

The TBC/de-shuffling circuit 22 corrects the time axis of the inputted reproduced digital video data D31 to match the block phase with the third clock CK2, then performs error correction based on the inner parity and de-shuffling, and supplies resultant digital video data D32 to the error correction circuit 23.

The error correction circuit 23 corrects errors in the digital video data D32 on the basis of the outer parity, and supplies resultant digital video data D33 to the de-interleave/error correction circuit 24.

The de-interleave/error correction circuit 24 de-interleaves the inputted digital video data D33, corrects errors, which could not be corrected by the error correction based on the inner and outer parities, by means of interpolation, etc., and supplies the resultant digital video data D34 to the time compression image synthesizer circuit 25.

The time compression image synthesizer circuit 25 time-compresses and synthesizes the digital video data D34 for eight channels inputted at the timing of the third clock CK2 and produces a digital luminance signal D14 and a multiplexed chrominance signal D15 having frequencies in a frequency band of 74.25 MHz according to the first clock CK0.

Further, in the reproducing system 44 of the DVTR 40, when a magnetic tape on which data are recorded by the recording system 40 with a pattern having continuous borders between adjacent blocks B in each sector SEC including the head blanking period is to be reproduced, the reproduced signals S50 to S57 for eight channels obtained from the respective heads 13A to 13H are supplied to the serial-parallel converter 21.

In the serial-parallel converter 21, the inputted reproduced signals S50 to S57 are converted into parallel data and inputted to the frequency conversion memory 45 as reproduced digital video data D40 having a processing rate corresponding to the third clock CK2.

In this case, the frequency conversion memory 45 reads the digital video data D40, which are written in with the timing of the third clock CK2, and supplies resultant reproduced digital video data D40 to the TBC/de-shuffling circuit 22 directly.

In this case, the TBC/de-shuffling circuit 22, the error correction circuit 23, the de-interleave/error correction circuit 24 and the time compression image synthesizer circuit 25 which form a reproduction signal processing circuit subsequent to the frequency conversion memory 45 are supplied with the third clock CK2 and operate with the timing corresponding to the third clock CK2.

The TBC/de-shuffling circuit 22 corrects the time axis for the inputted reproduced digital video data D40 to match the block phase with the third clock CK2, performs error correction based on the inner parity and de-shuffling, and supplies the resultant digital video data D41 to the error correction circuit 23.

The error correction circuit 23 performs error correction for the inputted digital video data D41 based on the outer parity, and supplies the resultant digital video data D42 to the de-interleave/error correction circuit 24.

The de-interleave/error correction circuit 24 de-interleaves the inputted digital video data D42, corrects errors, which could not be corrected according to the error correction based on the inner and outer parities, by means of interpolation, etc., and supplies the resultant digital video data D43 to the time compression image synthesizer circuit 25.

The time compression image synthesizer circuit 25 compresses the time axis of the digital video data D43 for eight channels inputted at the timing of the third clock CK2 and synthesizes them to produce the digital luminance signal D14 and the multiplexed chrominance signal D15 having frequencies in a frequency band of 74.25 MHz corresponding to the first clock CK0.

Thus, in the reproduction system 44 of the DVTR 40, when a magnetic tape on which data are recorded with a pattern having a discontinuous border between adjacent blocks B in each sector SEC is to be reproduced, it is possible to perform reproduction processing of the respective channels by the same reproduction signal processing circuit by frequency-converting by means of the frequency conversion memory 45, such that the border between adjacent blocks B in each sector SEC becomes continuous.

Further, in the reproduction system 44 of the DVTR 40, when a magnetic tape on which data are recorded with a pattern having a continuous border between adjacent blocks B in each sector SEC including the head blanking period is to be reproduced, it is possible to process the respective channels by the same reproduction signal processing circuit without performing frequency conversion by means of the frequency conversion memory, by operating the reproduction signal processing system with the timing of the third clock CK2.

With the circuit described above, in converting the video signal S0 into digital video data and recording them on a plurality of channels on the magnetic tape in blocks, it is possible to realize a DVTR 40 capable of recording the video signal S0 as a recording pattern in which borders between blocks B in each sector SEC including the head blanking period are continuous.

Further, with this circuit, in reproducing a magnetic tape on which has been recorded a recording pattern in which the border between adjacent blocks B is discontinuous in each sector SEC, it is possible to realize a DVTR 40 which is capable of reproducing a signal recorded on channels of the magnetic tape in a pattern in which the borders between blocks B are discontinuous, using the same reproduction signal processing circuit, by performing a single frequency conversion in the frequency conversion memory 45, such that borders between adjacent blocks B in each sector SEC become continuous.

Although, in the described embodiment, the frequency conversion memory 42 of the recording system 40 is downstream of the 1/4 division time expansion circuit 5, it may be inserted in a different position of the recording signal processing circuit.

Further, although in the described embodiment, the frequency conversion memory 45 of the reproduction system 44 is downstream of the serial-parallel conversion circuit 21, it may be inserted in a different position of the reproduction signal processing circuit.

Further, although, in the described embodiment, the present invention has been described when applied to a DVTR in which the input video signal is converted into digital data and recorded and reproduced through heads for eight channels, the number of recording and reproducing channels is not limited to eight.

Further, although, in the described embodiment, the present invention has been described when applied to a DVTR, it is not limited thereto, and can be applied to a recording and reproducing apparatus such as an analogue audio tape recorder, etc., in which a desired signal is recorded and reproduced, and converted into digital data.

## Claims

1. A digital data recording and/or reproducing apparatus comprising:
sampling means (5) for sampling digital data in each of a plurality of channels with the same sampling signal having a first frequency;
shuffling means (8) for shuffling said sampled digital data;
data block forming means (8) for forming data blocks, each of which has a predetermined number of digital data output from the shuffling means;
adding means (9) for adding additional data to each predetermined number of data blocks to form a recording data group;
recording means (13C) for recording a plurality of said recording data groups with an interval therebetween on each recording track of a recording medium by means of heads corresponding to said plurality of channels;
reproducing means (13B) for reproducing said recorded data from the recording medium; characterised by:
clock signal generating means (15, 16, 43) for generating said sampling signal and a clock signal having a second frequency different from said first frequency;
frequency conversion memory means (42) for memorizing data downstream from said sampling means in response to said sampling signal in each channel and for outputting the memorized data in response to said clock signal, said second frequency of said clock signal being selected so that the length of said interval is an integral multiple of that of a said data block and said clock signal being supplied to said shuffling means, data block forming means and/or adding means downstream from said first-in-first-out memory.

2. Apparatus according to Claim 1, wherein said frequency conversion memory means (42) is immediately downstream of said sampling means (5) and memorizes said sampled data from said sampling means.

3. Apparatus according to Claim 1 or Claim 2, wherein said frequency conversion memory means is a first-in-first-out memory (42).

4. A digital data reproducing apparatus for reproducing data recorded on a recording medium, said recorded data comprising a plurality of data groups recorded in respective recording tracks corresponding to a respective plurality of channels with a predetermined interval therebetween, each data group comprising a plurality of data blocks having a predetermined number of digital data each with additional data added thereto, said digital data reproducing apparatus comprising:
reproducing means (13B) for reproducing said recorded data from said recording medium;
clock signal generating means (15, 16, 43) for generating first, second and third signals;
frequency converting memory means (45) for memorizing said reproduced data from said recording medium in response to said second signal in each channel and outputting the memorized data in response to said third signal having a frequency different from said second frequency and selected so that the length of said interval is an integral multiple of that of a said data block, said first clock having a frequency different from the frequency of said third signal; and
time axis compression/expansion means (22, 23, 24, 25) responsive to said first and third signals (CK0, CK2) for compressing or expanding the time axis of digital data output from said frequency converting memory means (45), so that said compressed or expanded digital data have a predetermined sampling frequency corresponding to the frequency of said first signal.

5. Apparatus according to Claim 4, wherein said frequency converting memory means (45) is a first-in-first-out memory (45).

## Revendications

1. Appareil d'enregistrement et/ou de reproduction de données numériques comprenant :
un moyen d'échantillonnage (5) pour échantillonner des données numériques dans chacun d'une pluralité de canaux à l'aide du même signal d'échantillonnage présentant une première fréquence ;
un moyen de désordonnancement (8) pour désordonnancer lesdites données numériques échantillonnées ;
un moyen de formation de blocs de données (8) pour former des blocs de données dont chacun comporte un nombre prédéterminé de données numériques émises en sortie depuis le moyen de désordonnancement ;
un moyen d'addition (9) pour additionner des données supplémentaires à chaque nombre prédéterminé de blocs de données afin de former un groupe de données d'enregistrement ;
un moyen d'enregistrement (13C) pour enregistrer une pluralité desdits groupes de données d'enregistrement, un intervalle les séparant, sur chaque piste d'enregistrement d'un support d'enregistrement au moyen de têtes correspondant à ladite pluralité de canaux ;
un moyen de reproduction (13B) pour reproduire lesdites données enregistrées à partir dudit support d'enregistrement,
caractérisé par :
un moyen de génération de signal d'horloge (15, 16, 43) pour générer ledit signal d'échantillonnage et un signal d'horloge présentant une seconde fréquence différente de ladite première fréquence ;
un moyen de mémoire de conversion de fréquence (42) pour mémoriser des données en aval dudit moyen d'échantillonnage en réponse audit signal d'échantillonnage dans chaque canal et pour émettre en sortie les données mémorisées en réponse audit signal d'horloge, ladite seconde fréquence dudit signal d'horloge étant choisie de telle sorte que la longueur dudit intervalle soit un multiple entier de celle d'un dit bloc de données et ledit signal d'horloge étant appliqué sur ledit moyen de désordonnancement, ledit moyen de formation de blocs de données et/ou ledit moyen d'addition en aval de ladite mémoire premier entré premier sorti.

2. Appareil selon la revendication 1, dans lequel ledit moyen de mémoire de conversion de fréquence (42) est immédiatement en aval dudit moyen d'échantillonnage (5) et mémorise lesdites données échantillonnées provenant dudit moyen d'échantillonnage.

3. Appareil selon la revendication 1 ou 2, dans lequel ledit moyen de mémoire de conversion de fréquence est une mémoire premier entré premier sorti (42).

4. Appareil de reproduction de données numériques pour reproduire des données enregistrées sur un support d'enregistrement, lesdites données enregistrées comprenant une pluralité de groupes de données enregistrés sur des pistes d'enregistrement respectives correspondant à une pluralité respective de canaux, un intervalle prédéterminé les séparant, chaque groupe de données comprenant une pluralité de blocs de données comportant un nombre prédéterminé de données numériques et à chacun d'eux, des données supplémentaires sont ajoutées, ledit appareil de reproduction de données numériques comprenant :
un moyen de reproduction (13B) pour reproduire lesdites données enregistrées à partir dudit support d'enregistrement ;
un moyen de génération de signal d'horloge (15, 16, 43) pour générer des premier, second et troisième signaux ;
un moyen de mémoire de conversion de fréquence (45) pour mémoriser lesdites données reproduites à partir dudit support d'enregistrement en réponse audit second signal dans chaque canal et pour émettre en sortie les données mémorisées en réponse audit troisième signal présentant une fréquence différente de ladite seconde fréquence et sélectionnée de telle sorte que la longueur dudit intervalle soit un multiple entier de celle d'un dit bloc de données, ladite première horloge présentant une fréquence différente de la fréquence dudit troisième signal ; et
un moyen de compression/extension d'axe des temps (22, 23, 24, 25) sensible auxdits premier et troisième signaux (CK0, CK2) pour comprimer ou étendre l'axe des temps de données numériques émises en sortie depuis ledit moyen de mémoire de conversion de fréquence (45) de telle sorte que lesdites données numériques comprimées ou étendues présentent une fréquence d'échantillonnage prédéterminée correspondant à la fréquence dudit premier signal.

5. Appareil selon la revendication 4, dans lequel ledit moyen de mémoire de conversion de fréquence (45) est une mémoire premier entré premier sorti (45).

## Patentansprüche

1. Aufzeichnungs- und/oder Wiedergabevorrichtung für digitale Daten mit:
einer Abtasteinrichtung (5) zum Abtasten von digitalen Daten in jedem einer Vielzahl von Kanälen mit dem gleichen Abtastsignal, welches eine erste Frequenz besitzt;
einer Umstellungseinrichtung (8) zum Umstellen der abgetasteten digitalen Daten;
einer Datenblöcke bildenden Einrichtung (8) zum Bilden von Datenblöcken, von denen jeder eine vorgegebene Anzahl von digitalen Daten besitzt, welche von der Umstellungseinrichtung ausgegeben worden sind;
einer Additionseinrichtung (9) zum Addieren weiterer Daten zu jeder vorgegebenen Anzahl von Datenblöcken, um eine Aufzeichnungsdatengruppe zu bilden;
einer Aufzeichnungseinrichtung (13C) zum Aufzeichnen einer Vielzahl der Aufzeichnungsdatengruppen mit einem dazwischenliegenden Abstand auf jede Aufzeichnungsspur eines Aufzeichnungsmediums mit Hilfe von der Vielzahl der Kanäle entsprechenden Köpfen;
einer Wiedergabeeinrichtung (13B) zur Wiedergabe der aufgezeichneten Daten von dem Aufzeichnungsmedium;
gekennzeichnet durch:
eine Taktsignalerzeugungseinrichtung (15, 16, 43) zur Erzeugung des Abtastsignals und eines Taktsignals mit einer zweiten Frequenz, welche von der ersten Frequenz verschieden ist;
eine die Frequenz umsetzende Speichereinrichtung (42) zum Speichern der Daten auf der Austrittsseite der Abtasteinrichtung als Reaktion auf das Abtastsignal in jedem Kanal und zur Ausgabe der gespeicherten Daten als Reaktion auf das Taktsignal, wobei die zweite Frequenz des Taktsignals derart ausgewählt ist, daß die Länge des Abstands ein ganzzahliges Vielfaches von jener eines Datenblocks ist, und wobei das Taktsignal der Umsetzungseinrichtung, der die Datenblöcke bildenden Einrichtung und/oder der Additionseinrichtung auf der Austrittsseite des First-In-First-Out-Speicher zugeführt werden.

2. Vorrichtung nach Anspruch 1, bei welcher die die Frequenz umsetzende Speichereinrichtung (42) unmittelbar auf der Austrittsseite der Abtasteinrichtung (5) angeordnet ist und die von der Abtasteinrichtung abgetasteten Daten speichert.

3. Vorrichtung nach Anspruch 1 oder 2, bei welcher die die Frequenz umsetzende Speichereinrichtung ein First-In-First-Out-Speicher (42) ist.

4. Wiedergabevorrichtung für digitale Daten zur Wiedergabe von Daten, welche auf einem Aufzeichnungsmedium aufgezeichnet worden sind, wobei die aufgezeichneten Daten eine Vielzahl von Datengruppen umfassen, welche in jeweiligen Aufzeichnungsspuren, die einer jeweiligen Vielzahl von Kanälen entsprechen, mit einem vorgegebenen dazwischenliegenden Abstand aufgezeichnet sind, wobei jede Datengruppe eine Vielzahl von Datenblökken mit einer vorgegebenen Anzahl von digitalen Daten umfaßt, bei denen jedem zusätzlich Daten hinzugefügt worden sind, wobei die Wiedergabevorrichtung für digitale Daten umfaßt:
eine Wiedergabeeinrichtung (13B) zur Wiedergabe der aufgezeichneten Daten von dem Aufzeichnungsmedium;
eine Taktsignalerzeugungseinrichtung (15, 16, 43) zur Erzeugung von ersten, zweiten und dritten Signalen;
eine die Frequenz umsetzende Speichereinrichtung (45) zum Speichern der von dem Aufzeichnungsmedium wiedergegebenen Daten als Reaktion auf das zweite Signal in jedem Kanal und zur Ausgabe der gespeicherten Daten als Reaktion auf das dritte Signal mit einer Frequenz, welche von der zweiten Frequenz verschieden ist und so ausgewählt ist, daß die Länge des Abstands ein ganzzahliges Vielfaches von jener eines Datenblocks ist, wobei der erste Takt eine Frequnz aufweist, welche von der Frequenz des dritten Signals verschieden ist; und
eine Zeitachsen-Kompressions-/Expansionseinrichtung (22, 23, 24, 25), welche auf die ersten und zweiten Signale (CK0, CK2) zur Kompression oder Expansion der Zeitachse des digitalen Datenausgangssignals von der die Frequenz umsetzende Speichereinrichtung (45) derart anspricht, daß die komprimierten oder expandierten digitalen Daten eine vorgegebene Abtastfrequenz aufweisen, welche der Frequenz des ersten Signals entspricht.

5. Vorrichtung nach Anspruch 4, bei welcher die die Frequenz umsetzende Speichereinrichtung (45) ein First-In-First-Out-Speicher (45) ist.
